# EUROPEAN PATENT SPECIFICATION

(11) **EP 4 052 775 B1**
(45) Date of publication and mention of the grant of the patent: **08.11.2023**
(21) Application number: 22159478.1
(22) Date of filing: 01.03.2022
(51) Int. Cl.: D01D 5/08, D01D 5/098, D01D 13/02, D04H 3/016, D04H 3/033, D04H 3/14, D01F 6/62, D04H 3/011, B01D 39/16

(54) **GRADIENT FIBER NON-WOVEN FABRIC**
VLIESSTOFF AUS GRADIENTENFASERN
TISSU NON TISSÉ À FIBRES À GRADIENT

(30) Priority: 02.03.2021 CN 202110232407
(43) Date of publication of application: 07.09.2022
(73) Proprietor: Central Alliance Nonwoven Co., Ltd., Foshan City, Guangdong 528223 (CN)
(72) Inventor: CHENG, Shiyuan, Foshan City, Guangdong Province, 528223 (CN); LI, Liuquan, Foshan City, Guangdong Province, 528223 (CN)
(74) Representative: Meyer, Thorsten

(56) References cited:
- EP-B1- 1 198 279
- EP-B1- 2 220 276
- US-A- 4 714 647
- US-A- 5 639 541
- US-A1- 2017 050 220
- US-A1- 2018 272 258

## Description

### TECHNICAL FIELD

The invention belongs to the field of non-woven fabrics, in particular to a gradient fiber non-woven fabric.

### BACKGROUND

A non-woven fabric composed of fibers for air and water filtration has a density of 260 g/m². The fiber diameter of the non-woven fabric on the market is 16 µm-18 µm. For example, the non-woven fabric imported from Japan has a fiber diameter of 16 µm, which has a pressure difference of 60 pa-70 pa, and the pressure difference is 250 pa when it is laminated. There is a problem that when the non-woven is applied to an industrial dust removal equipment, the air permeability is insufficient due to the large pressure difference. And the dust captured by the nonwoven fabric is difficult to be completely removed by back blowing, while a film laminated on the surface of the non-woven fabric is easily blown through. The dust accumulation on the non-woven fabric that increases with using time leading to more energy consumption of the dust removal equipment. To reduce the energy consumption, the filter cartridge of the dust removal equipment needs to be replaced regularly, which increases the cost. Especially in steel plants or cement plants which requires continuous work for a long time, the filter cartridges need to be replacement more frequently, which is not only costly, but also causes great waste.

EP 1198279 B1 discloses a nonwoven filter material comprising a first layer of microfibers having an average diameter of less than 8 and a second layer of macrofibers having a diameter in excess of about 15 micrometers, which are desirably meltblown fibers and bonded together. The basis weight of the first layer of microfibers is between 17 g/m² and 300 g/m², while the second layer has a basis weight less than about 100 g/m². But EP 1198279 B1 does not involve any bonding parameters of the filter material, such as bonding point depth or area. The Chinese application 201680074618.X "spunbond non-woven fabric for filter and its manufacturing method" discloses a non-woven fabric for filter, which is composed of composite polyester fibers. It has the problem that when the composite polyester fiber has a smaller diameter, such as a diameter of 16 µm, the filtration accuracy is high, but the air permeability is lower, because the smaller the diameter, the denser the fabric structure, resulting in a larger pressure difference of the non-woven fabric; when the composite polyester fiber has a larger diameter, the problem of insufficient air permeability can be solved, but the filtration accuracy cannot meet the requirements. How to obtain a smaller pressure difference of non-woven fabrics while ensuring high filtration accuracy has always been a problem to be solved in the industry.

### SUMMARY OF THE INVENTION

In order to overcome the above-mentioned defects of the prior art, the present invention proposes a gradient fiber non-woven fabric. The gradient fiber non-woven fabric of the present invention has high filtration efficiency, small pressure difference and long service life. The technical problem to be solved by the present invention is achieved through the following technical solutions:

A gradient fiber non-woven fabric, comprising a coarse long-fiber layer and a fine long-fiber layer, the coarse long-fiber layer has a fiber diameter of 30 µm-40 µm, the fine long-fiber layer has a fiber diameter of 13 µm-17 µm; and the coarse long-fiber layer weighs 100g-150g per square meter, the fine long-fiber layer weighs 100g-150g per square meter. A bonding point area of the gradient fiber non-woven fabric accounts for 25% of the total area of the non-woven fabric, and a depth of the bonding point is 0.05 mm-0.1 mm.

Further, the gradient fiber non-woven fabric has a thickness of 0.5 mm-0.8 mm, a thickness of the coarse long-fiber layer is 0.2 mm-0.5 mm, and a thickness of the fine long-fiber layer is 0.2 mm-0.4 mm.

The gradient fiber non-woven fabric of the present invention has a small pressure difference, and is used in dust removal industries, such as steel plants or cement plants. The advantages include: 1. The non-woven fabric of the present invention has high air permeability, so that the dust removal equipment is easier to clean the dust accumulated on the filter cartridge by blowing back, and more durable. Compared with non-woven fabrics on the market, the service life of the filter cartridge is increased by more than 30%. 2. The motor of the dust removal equipment consumes less electricity. Compared with the non-woven fabrics on the market, the present invention saves 10% of the electricity. 3. The filtration efficiency can reach 99.5%, according to the emission test of a steel plant, the overall dust emission concentration in the steel plant is 3mg-5mg per cubic meter, which is far lower than the national emission standard of 10mg per cubic meter, realizing energy saving and emission reduction.

### BRIEF DESCRIPTION OF DRAWINGS

Fig. 1 is a structural diagram of the non-woven fabric of the present invention;
Fig. 2 is a enlarged view of A part in Fig. 1;
Fig. 3 is a structural diagram of the spinning apparatus (not part of this invention).

### DETAILED DESCRIPTION OF ILLUSTRATED EXAMPLES

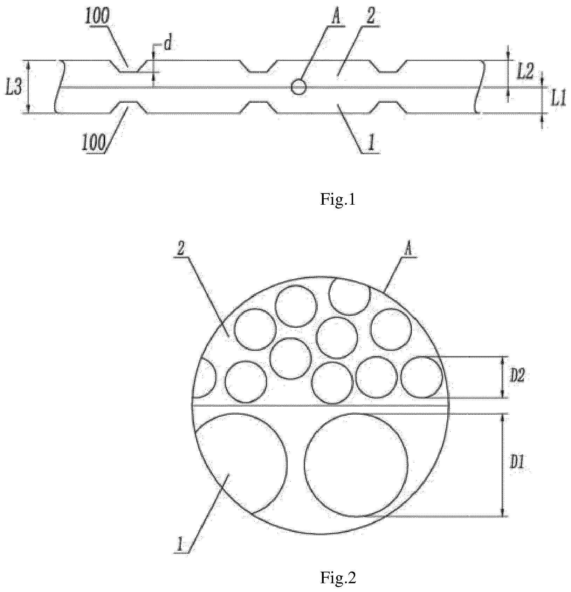

Fig. 1 is a structural diagram of the non-woven fabric of present invention, and Fig. 2 is an enlarged view of part A of Fig. 1. As shown in Figs 1 and 2, a gradient fiber non-woven fabric includes coarse long-fiber layer 1 and a fine long-fiber layer 2. The coarse long-fiber layer 1 has a fiber diameter D 1 of 30 µm-40 µm, and the fine long-fiber layer 2 has a fiber diameter D2 of 13 µm-17 µm; the coarse long-fiber layer 1 weighs 100 g-150 g per square meter, and the fine long-fiber layer 2 weighs 100 g-150 g per square meter. The so-called gradient fiber non-woven fabric means that two layers of non-woven fabrics with different fiber densities, one layer having a fiber diameter of 30µm-40µm, and the other layer having a diameter 13µm-17µm, are adhesively bonded at a certain temperature and pressure. The gradient fiber non-woven fabric of this embodiment is a long-fiber non-woven fabric, and the bonding point 100 of the gradient fiber non-woven fabric accounts for 25% of the total area of the non-woven fabric, and the depth d of the bonding point 100 is 0.05 mm-0.1 mm.

The gradient fiber non-woven fabric has a thickness L3 of 0.6 mm-0.65 mm, the coarse long-fiber layer 1 is in a thickness L1 of 0.2 mm-0.3 mm, and the fine long-fiber layer 2 is in a thickness L2 of 0.3 mm-0.4 mm. The surface of the fine long-fiber layer 2 is suitable for PTFE film lamination through hot pressing, and the filtration efficiency can reach 99.5% after the lamination. Because of the small fiber diameter of the fine long-fiber layer 2 and the shallow depth of the bonding point 100, the laminating film on the surface is more durable, even, and smoother. The main function of the fine long-fiber layer 2 of the present invention is to support a PTFE film on the surface, making it flat and firm, not easy to be broken by blowing, ensuring the filtration efficiency and durability. The coarse long-fiber layer 1 of the present invention is to support the fine long-fiber layer 2, and since the fiber diameter of the coarse long-fiber layer 1 is large, the layer has a large pore size, so it is more breathable.

The present invention is very suitable for application in folding filter cartridges. First, the high filtration efficiency obtained by the lamination of the non-woven fabric ensures a high dust removal efficiency of the filter cartridge. Due to good rigidity of the coarse long-fiber layer 1 and the fine long-fiber layer 2, the gradient non-woven fabric is easy to be folded and shaped, and easy to be disposed on a filter cartridge. Finally, the biggest advantage of the present invention is that since the coarse long-fiber layer 1 is more breathable, the overall air permeability of the non-woven fabric is good, so that the pressure difference of the gradient fiber nonwoven fabric of the present invention is small. Tested by the national standard GB/T6165-2008, the pressure difference of the gradient fiber non-woven fabric of the present invention is 10 pa, which is 6 times less than the pressure difference of non-woven fabrics on the market. The pressure difference of a laminated nonwoven fabric of the present invention is also smaller than the one on the market. The specific data are shown in Table 1. The present invention is particularly suitable for use in dust removal equipment such as steel plants or cement plants.

**Table 1**

| | Temp | Humidity | Dusty air flow passing the non-woven fabric | Pressure difference | Filtration efficiency |
|---|---|---|---|---|---|
| Non-woven fabric on the market | 16 °C | 40% | 32L/min | 60pa-70pa | 18%-20% |
| Gradient fiber nonwoven fabric | | | | 10pa | 18%-20% |
| Non-woven fabric on the market (laminated) | | | | 250pa | 99% |
| Gradient fiber nonwoven fabric (laminated) | | | | 100pa | 99.5% |

The benefit brought by the small pressure difference when the non-woven fabric is used in industrial dust removal industries, such as steel plants or cement plants, is as follows: 1. The present invention has high air permeability, and the dust removal equipment is easier to clean dust by blowing back, so it is more durable. Compared with the commercially available non-woven fabrics, the filter cartridge service life is increased by more than 30%. 2. The motor of the dust removal equipment consumes less electricity. Compared with the non-woven fabrics on the market, the present invention saves 10% of the electricity. 3. The filtration efficiency can reach 99.5%. According to an emission test carried by a steel plant, the emission concentration of all the dust in the steel plant is 3mg-5mg per cubic meter, which is far lower than the national emission standard of 10mg per cubic meter, realizing energy saving and emission reduction.

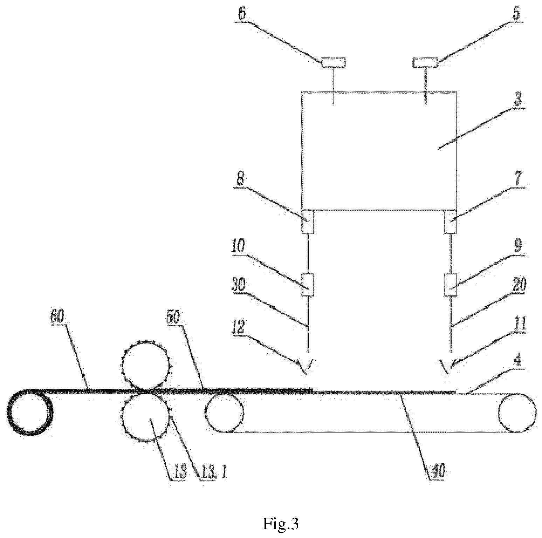

FIG. 3 is a structural diagram of the spinning apparatus (not part of this invention). As shown in FIG. 3, the spinning apparatus for manufacturing the gradient fiber non-woven fabric includes a spinning box, a filament-laying reciprocator, and an air-permeable conveying screen. A first metering pump 5 and a second metering pump 6 are arranged on the spinning box 3, and two rows of spinneret group, a front-row spinneret group 7 and a rear-row spinneret group 8 respectively, are provided at a lower end of the spinning box 3. A first drawing device 9 is arranged below the first-row spinneret group 7, and a second drawing device 10 is arranged below the second-row spinneret group 8. A first filament-laying reciprocator 11 is provided below the first drawing device 9 and a second filament-laying reciprocator 12 is provided below the second drawing device 10. The first filament-laying reciprocator 11 and the second filament-laying reciprocator 12 space at an interval of 1 m. The air-permeable conveying screen 14 is arranged below the first filament-laying reciprocator 11 and the second filament-laying reciprocator 12.

The front-row spinneret group 7 and the rear-row spinneret group 8 are respectively composed of multiple groups of spinnerets. The width of the front-row spinneret group 7 and the rear-row spinneret group 8 can reach 2.4 m. A certain number of densely distributed spinneret holes are arranged in each spinneret of the front-row spinneret group 7 and the rear-row spinneret group 8, and the diameter of the spinneret holes is 0.1mm-0.4mm. The spinneret holes in each of the spinneret of the front-row spinneret group 7 is in smaller quantity and larger diameter, so that the diameter of the filament drawn through the first drawing device 9 is 40 µm; the spinneret holes in each of the spinneret of the rear-row spinneret group 8 is in larger quantity and smaller diameter, so that the diameter of the filament drawn through the second drawing device 10 is 16 µm. Of course, it is also possible that each spinneret in the front-row spinneret group 7 has a large quantity of spinneret holes with small diameter, so that the diameter of the filament drawn through the first drawing device 9 is 13 µm-17 µm; the spinneret holes of each spinneret of the rear-row spinneret group 8 are small in quantity and large in diameter, so that the diameter of the filament drawn through the second drawing device 10 is 30 µm-40 µm. The working process and method steps are the same as those described in the following, so they are not repeated here.

A manufacturing method (not part of this invention) of a gradient fiber non-woven fabric, comprising the following steps:
Step 1: Pre-crystallizing and drying a raw material; where the raw material is polyethylene terephthalate (PET chip). The PET chip is pre-crystallized in a fluidized-bed crystallizer under a pulsed air flow to prevent the PET chip from agglomerating, and then dried to obtain a dried PET chip having a moisture content of less than 40 ppm;
Step 2: Melting the dried PET chip to obtain a liquid melt;
Step 3: Filtering the liquid melt with a filter before feeding it into a spinning box 3 for extrusion, quantitatively feeding the liquid melt into the front-row spinneret group 7 and the rear-row spinneret group 8 at the lower end of the spinning box 3 through the first metering pump 5 and the second metering pump 6 respectively and then extruding the liquid melt and cooling to obtain a filament, passing the filament to the first drawing device 9 and the second drawing device 10 respectively;
Step 4: Stretching the filament in the first drawing device 9 and the second drawing device 10 respectively, then passing a stretched filament to the first filament-laying reciprocator 11 and the second filament-laying reciprocator 12 respectively;
Step 5: Dispersing the stretched filament on the air-permeable conveying screen 4 by the first filament-laying reciprocator 11 and second filament-laying reciprocator 12 in a swinging manner at the same time to form a first filament web layer 40 on the air-permeable conveying screen 4 by the first filament-laying reciprocator 11 and form a second filament web layer 50 on the air-permeable conveying screen 4 by the second filament-laying reciprocator 12, where the air-permeable conveying screen 4 moves in a direction from the first filament-laying reciprocator 11 to the second filament-laying reciprocator 12;
Step 6: Passing the first filament web layer 40 overlapped with the second filament web layer 50 to a thermal calendaring machine by the air-permeable conveying screen 4 for thermal bonding to obtain a dense gradient fiber non-woven fabric 60;
Step 7: Cooling the dense gradient fiber non-woven fabric 60 and winding to obtain a product.

In the present case, the melting point of the PET chip is 260°C, the temperature of the fluidized-bed crystallizer in step 1 is 160°C -180°C, the pre-crystallization is carried out for 20 min-30 min, and the drying is carried out for 4 h-6 h. The melting temperature in step 2 is 270°C-300°C. The temperature in the spinning box 3 in step 3 is maintained at 285°C-295°C, and the first metering pump 5 and the second metering pump 6 have a rotational speed of 8 rpm to 25 rpm. A swing frequency of the first filament-laying reciprocator 11 and the second filament-laying reciprocator 12 in step 5 are 100 times/s-1000 times/s respectively, and a linear speed of the air-permeable conveying screen 4 in step 5 is 6 m/min-15 m/min. Air is aspirated under the conveying screen 4 at a pressure of negative 800 pa-negative 1500 pa. A pressure of the thermal calendaring machine in step 6 is 20 tons to 60 tons, the pressure control accuracy is ±1%, a temperature of the thermal calendaring machine is 230°C - 270°C, and protruding bonding stubs 13.1 are provided on the surface of a thermal bonding roll 13 of the thermal calendaring machine. The bonding stubs 13.1 are distributed in a crisscrossed manner and the area of the bonding stub 13.1 accounts for 25% of the surface area of the thermal bonding roll 13.

The entire manufacturing process is controlled by a central controller, which includes configuration software and a programmable logic controller (PLC).

The following is an example of a non-woven fabric with a basis weight of 260 g/m² to illustrate the manufacturing method of the gradient fiber non-woven fabric:
Step 1: Raw material is pre-crystallized and dried. Undried PET chips generally have a moisture content of about 0.4%, and the chips are amorphous polymers with a low softening point. If they are directly used for spinning, they will undergo violent degradation when heated to melt, which reduces the molecular weight and affects the spinning quality. In addition, moisture vaporization at high temperature will form bubble fibers, which will cause spinning breakage or hairy filaments, so drying is very important.

The PET chips are pre-crystallized in the fluidized-bed crystallizer, the temperature of the fluidized-bed crystallizer is 160°C, the pre-crystallization is carried out for 25 minutes, and pulsed air blowing is performed at the same time to boil the PET chips to avoid agglomeration. The chips become harder with increasing crystallinity, which can prevent softening adhesion of PET in an extruder during drying, so that the quality of the liquid melt during spinning is uniform. And the drying time is 5 hours. The purpose of drying is to control the moisture content within a certain range. The moisture content of the dried PET chips is less than 40 ppm, and the intrinsic viscosity change after drying is required to be less than 0.01. The intrinsic viscosity change is due to the degradation of the polyester macromolecules which reduces the intrinsic viscosity, or due to solid phase polymerization which increases the intrinsic viscosity. It is necessary to control the drying temperature, drying time and the dew point of the dried air. The dew point refers to the temperature at which the water vapor in air reaches saturation. The lower the moisture content in air, the lower the dew point. The dried air has a dew point of less than -10°C.

In step 2, the dried PET chips are melted at 290°C. The melting point of the PET in this case is 260°C, and the PET chips become a liquid melt after melting.

In step 3, after the liquid melt is filtered through the filter, it flows into the spinning box 3 for spinning, the temperature in the spinning box 3 is kept at 295°C, and the lower end of the spinning box 3 is provided with a front-row spinneret group 7 and a rear-row spinneret group 8, the front-row spinneret group 7 are metered by the first metering pump 5, the rotational speed of the first metering pump 5 is 18 rev/min, and the rear-row spinneret group 8 is metered by the second metering pump 6, the rotational speed of the second metering pump 6 is 18 rev/min, and then the liquid melt is extruded through the front-row spinneret group 7 and the rear-row spinneret group 8, and cooled to form filaments at the same time. The filaments enter the first drawing device 9 and the second drawing device 10.

In step 4, the first drawing device 9 stretches the filaments to obtain filaments 20 with a diameter of 40 µm, and the second drawing device 10 stretches the filaments to obtain the filament 30 with a diameter of 16 µm. After drawing, the filament 20 with a diameter of 40 µm enters the first filament-laying reciprocator 11 and the filament 30 with a diameter of 16 µm enters the second filament-laying reciprocator 12.

In step 5: The first filament-laying reciprocator 11 and the second filament-laying reciprocator 12 disperse the filaments on the air-permeable conveying screen 4 in a swinging manner at the same time, and the frequency of the first filament-laying reciprocator 11 and the second filament-laying reciprocator 12 is 700 times/s. A first filament web layer 40 is formed by the first filament-laying reciprocator 11 on the air-permeable conveying screen 4 with the filaments 20 in 40 µm diameter, and a second filament web layer 50 is formed on the air-permeable conveying screen 4 with the 16 µm-diameter filaments 30 by the second filament-laying reciprocator 12. At the same time, air is aspirated under the air-permeable conveying screen 4 at a pressure of -1200 Pa. Since the moving direction of the air-permeable conveying screen 4 is from the first filament-laying reciprocator 11 to the second filament-laying reciprocator at a linear speed of 8 m/min, a lower layer on the screen is the first filament web layer 40. When the lower layer passes through the second filament-laying reciprocator 12, the second filament web layer 50 overlaps on the first filament web layer 40 to form an upper layer. By coordinating the linear speed of the air-permeable conveying screen 4 with the rotational speed of the first metering pump 5 and the second metering pump 6, a first filament web layer with a basis weight of 130g/m² and a second filament web layer with a basis weight of 130g/m² are obtained.

In step 6, the overlapped first filament web layer 40 and the second filament web layer 50 are passed to a thermal calendaring machine for thermal bonding through the air-permeable conveying screen 4. The pressure of the thermal calendaring machine is 40 tons, and the pressure control precision is ±1%, the temperature is 250°C. A dense gradient fiber non-woven fabric 60 is obtained after the thermal bonding, that is, a gradient fiber non-woven fabric 60 as shown in FIG. 1 with an upper layer of a fine long-fiber fabric layer 2 and a lower layer of a coarse long-fiber fabric layer 1. The depth d of the bonding points 100 is 0.1 mm. The surface of the thermal bonding roll 13 of the thermal calendaring machine is provided with a protruding bonding stubs 13.1, the bonding stubs 13.1 are in a crisscrossed pattern on the surface of the thermal bonding roll 13 and have an area accounts for 25% of the surface area of the thermal bonding roll 13, to ensure that the bonding point area of the gradient fiber non-woven fabric occupies 25% of the total area of the non-woven fabric.

In step 7, the dense gradient fiber non-woven fabric 60 is cooled and wound to finally obtain a finished product.

When the spinning apparatus is started, the second filament web layer 50 is not laid on top of the first filament web layer 40 because the filaments are laid out at the same time. Therefore, it is necessary to cut out the several meter to several tens of meters of non-woven fabric at the front end to obtain a gradient fiber non-woven fabric product meeting specification requirement through continuous production.

In a word, the gradient fiber non-woven fabric of the present invention has a small pressure difference and can be used in dust removal industries, such as steel plants or cement plants. The benefits are as follows: 1. The present invention has better air permeability. It is easier to perform a back blowing to clean dust accumulated on the filter cartridge. Compared with nonwoven fabrics on the market, the service life of the filter cartridge is increased by more than 30%. 2. The motor of the dust removal equipment consumes less power. Compared with the non-woven fabrics on the market, the present invention saves 10% of electricity. 3. The filtration efficiency can reach 99.5%. According to the emission test of the iron plant, the overall dust emission concentration in the iron plant is 3mg-5mg per cubic meter, which is far lower than the national emission standard of 10mg per cubic meter, realizing energy saving and emission reduction.

## Claims

1. A gradient fiber non-woven fabric, comprising a coarse long-fiber layer and a fine long-fiber layer, the coarse long-fiber layer has a fiber diameter of 30 µm-40 µm, the fine long-fiber layer has a fiber diameter of 13 µm-17 µm; the coarse long-fiber layer weighs 100g-150g per square meter, the fine long-fiber layer weighs 100g-150g per square meter; a bonding point area of the gradient fiber non-woven fabric accounts for 25% of the total area of the non-woven fabric, and a depth of the bonding point is 0.05 mm -0.1 mm.

2. The gradient fiber non-woven fabric according to claim 1, wherein the gradient fiber non-woven fabric has a thickness of 0.5 mm-0.8 mm, a thickness of the coarse long-fiber layer is 0.2 mm-0.5 mm, and a thickness of the fine long-fiber layer is 0.2 mm-0.4 mm.

## Patentansprüche

1. Vliesstoff aus Gradientenfasern, umfassend eine grobe Langfaserschicht und eine feine Langfaserschicht, wobei die grobe Langfaserschicht einen Faserdurchmesser von 30nm - 40nm hat, die feine Langfaserschicht einen Faserdurchmesser von 13nm - 17nm hat, die grobe Langfaserschicht 100g - 150g pro Quadratmeter wiegt, die feine Langfaserschicht 100g - 150g pro Quadratmeter wiegt; eine Bindungspunktfläche des Gradientenfaser-Vliesstoffs 25 % der Gesamtfläche des Vliesstoffs ausmacht und eine Tiefe des Bindungspunkts 0,05mm - 0,1mm.

2. Vliesstoff aus Gradientenfasern nach Anspruch 1, wobei der Vliesstoff aus Gradientenfasern eine Dicke von 0,5 mm - 0,8 mm hat, die Dicke der groben Langfaserschicht 0,2 mm - 0,5 mm und die Dicke der feinen Langfaserschicht 0,2 mm - 0,4 mm beträgt.

## Revendications

1. Un tissu non-tissé à fibres dégradées, comprenant une couche de fibres longues grossières et une couche de fibres longues fines, la couche de fibres longues grossières a un diamètre de fibre de 30nm - 40nm, la couche de fibres longues fines a un diamètre de fibre de 13nm - 17nm, la couche de fibres longues grossières pèse 100g - l50g par mètre carré, la couche de fibres longues fines pèse 100g - 150g par mètre carré ; la surface du point de collage du tissu non-tissé à fibres dégradées représente 25 % de la surface totale du tissu non-tissé, et la profondeur du point de collage est de 0,05 mm à 0,1 mm. 05mm - 0,1mm.

2. Le tissu non-tissé à fibres dégradées selon la revendication 1, dans lequel le tissu non-tissé à fibres dégradées a une épaisseur de 0,5 mm - 0,8 mm, une épaisseur de la couche de fibres longues grossières de 0,2 mm - 0,5 mm, et une épaisseur de la couche de fibres longues fines de 0,2 mm - 0,4 mm.
